# EUROPÄISCHE PATENTSCHRIFT

(11) **EP 1 074 920 B1**
(45) Veröffentlichungstag und Bekanntmachung des Hinweises auf die Patenterteilung: **22.05.2002**
(21) Anmeldenummer: 00105668.8
(22) Anmeldetag: 17.03.2000
(51) Int. Cl.: G06F 17/30, H04L 29/12, H04L 12/18

(54) **Informationsübermittlung mittels Adressdatenfeld**
Transmission of information by means of an address data field
Transmission d'information au moyen d'un champ de données d'adresse

(30) Priorität: 29.07.1999 DE 19935792
(43) Veröffentlichungstag der Anmeldung: 07.02.2001
(73) Patentinhaber: INTERSHOP Software Entwicklungs GmbH, 07743 Jena (DE)
(72) Erfinder: Timpe, Udo, 08496 Neumark (DE)
(74) Vertreter: Betten & Resch

(56) Entgegenhaltungen:
- US-A- 5 826 029
- US-A- 5 878 219
- US-A- 5 893 091
- "MAPPING PROTOCOL REQUESTS TO UNIFORM RESOURCE LOCATORS" IBM TECHNICAL DISCLOSURE BULLETIN,US,IBM CORP. NEW YORK, Bd. 39, Nr. 5, 1. Mai 1996 (1996-05-01), Seiten 149-150, XP000584088 ISSN: 0018-8689
- HTTP/1.1 - Spezifikation RFC 2616, Juni 1999, Fielding et. al., ladbar von der W3C Web Site

## Beschreibung

Die Erfindung betrifft ein vernetztes Computersystem mit wenigstens einem Server-Computer und einem oder mehreren mit diesem über ein Computernetzwerk verbundene Client-Computern sowie ein Verfahren zur Datenübertragung auf dem Computernetzwerk. Außerdem betrifft die Erfindung einen Server-Computer für ein derartiges Computernetzwerk und ein in den Server-Computer ladbares Computerprogramm.

Computernetzwerke finden heutzutage vielfache Anwendung sowohl als lokale Netzwerke innerhalb einer Organisation oder eines Unternehmens (Intranet) oder als globales Netzwerk wie das Internet. Der am häufigsten benutzte Dienst des Internets ist das world wide web (www), das es einem Nutzer ermöglicht, mittels eines sogenannten Client-Computers unter Verwendung eines Browser-Programmes auf einfache Art und Weise jede gewünschte Internet-Adresse anzuwählen. Zur eindeutigen Identifikation eines Server-Computers, oder auf diesem gespeicherten Dateninhalten, auf die über das Computernetzwerk zugegriffen werden kann, dient ein Adressdatenfeld mit Adressierungsinformation. Im world wide web dient der Uniform Ressource Locator (URL) als Adressdatenfeld. Wird von einem Benutzer die URL korrekt eingegeben und über das www weitergegeben, so erhält der Benutzer daraufhin Informationen von dem angewählten Server-Computer, wie etwa eine sogenannte Homepage, die auf dem Bildschirm des Client-Computers dargestellt wird.

Die URL wird so in Computernetzwerken als Adresse zur Lokalisierung von Quellen und Zielen verwendet. Aus einer definierten Zeichenfolge ermittelt der jeweilige Empfänger per URL des Server-Computers den Inhalt und die Lage der gewünschten Information, die durch den adressierenden Nutzer mittels des Clients (beispielsweise unter Verwendung eines www-Browsers) angegeben worden sind. Die Bestandteile der URL adressieren HTML (Hyper Text Markup Language)-Seiten, Objekte (inhaltliche Adressierung) oder lösen bestimmte Aktionen auf Server- beziehungsweise Clientsseite aus (Befehlsübertragung).

Der Inhalt des Adressdatenfeldes beziehungsweise der URL dient dabei ausschließlich der Lokalisierung und inhaltlichen Identifizierung der auf-/abzurufenden Informationen von dem damit adressierten www-Server-Computer. Zusätzlich können in der URL noch Befehle und Parameter angehängt werden, wie beispielsweise in US 5,870,546 und US 5,872,769 beschrieben ist.

Weiterhin ist es aus der US 5,712,979 bekannt, Informationen zur Identifikation des Nutzers zu übertragen. Aus der US 5,724,424 und der US 5,715,314 ist es außerdem bekannt, in der URL Informationen über eine www-Sitzung zu ermitteln, um beispielsweise Statistiken oder dergleichen zu erstellen.

In jüngster Zeit wurde auch die Integration zusätzlicher Objektattribute wie beispielsweise einer EAN-Nummer (Strichcode WO 98/03923) oder auch Informationen über Zahlungsmethoden (WO 98/19260) vorgeschlagen.

Die URL kann entweder als lesbares Format oder komplett verschlüsselt übertragen werden. Die Verschlüsselung macht den Inhalt der URL unlesbar und schützt dadurch die Inhalte vor unautorisiertem Zugriff.

Für viele Netzwerkanwendungen ist es wünschenswert, dem Benutzer (Surfer) unaufgefordert Informationen wie etwa Werbung übermitteln zu können oder kontinuierlich Informationen wie etwa Nachrichten, Börsenkurse usw. zu übermitteln, ohne daß jedesmal eine Anfrage (Request) des Benutzers erforderlich ist.

Der vorliegenden Erfindung liegt daher die Aufgabe zugrunde, ein Computersystem und ein Verfahren zur Informationsübermittlung auf einem Computersystem zu schaffen, das eine Möglichkeit der Informationsübermittlung zwischen Server-Computer und Client-Computer unabhängig von den von dem Benutzer angeforderten Daten bietet.

Gelöst wird die Aufgabe durch das in Anspruch 1 definierte vernetzte Computersystem, das in Anspruch 10 definierte Verfahren, den in Anspruch 20 definierten Server-Computer beziehungsweise die in den Ansprüchen 23 und 24 definierten Computerprogramme. Vorteilhafte Weiterbildungen der Erfindung sind in den abhängigen Ansprüchen beschrieben.

Das erfindungsgemäße vernetzte Computersystem weist wenigstens einen Server-Computer und wenigstens einen Client-Computer auf, wobei dem Server-Computer ein über das Netzwerk übermittelbares Adressdatenfeld mit Adressierungsinformation zur eindeutigen Identifizierung des Server-Computers und/oder von auf diesem gespeicherten Dateninhalten und/oder eines Befehls zugeordnet ist. Über das Adressdatenfeld ist zusätzliche Nutzinformation übertragbar, die unabhängig von der Adressierungsinformation wählbar ist.

Die Nutzinformation kann dabei auf einer Anzeigeneinrichtung des Client-Computers, eventuell hervorgehoben, dargestellt werden.

Die Adressierungsinformation in dem Adressdatenfeld kann verschlüsselt übertragen werden, während die Nutzinformation unverschlüsselt gesendet wird. Dies hat den Vorteil, daß die Adressierungsinformation vor unautorisiertem Zugriff geschützt ist und gleichzeitig die Nutzinformation, wie etwa Werbeinhalte, lesbar ist.

Die über das Adressdatenfeld an einen Client-Computer gesendete Information kann in festgelegten Zeitintervallen oder in Abhängigkeit einer auf dem Client-Computer ausgeführten Funktion geändert werden. So ist einerseits die Übertragung von Nachrichten,- Börseninformationen usw. als Lauftext und andererseits eine interaktive Übersendung von Informationen in Abhängigkeit von einer Handlung des Nutzers des Client-Computers, beispielsweise eines Bildschirm-Scrollens möglich.

Die Nutzinformation kann in dem Adressdatenfeld beispielsweise unmittelbar nach der Server-Adresse angeordnet sein. Jede andere Position ist jedoch auch denkbar.

Das erfindungsgemäße Adressdatenfeld beinhaltet neben den bisherigen Informationen zusätzliche Nutzinformation, die nicht auf die Adressierungsinformation, den abgerufenen HTML-Seiten oder auf den Inhalt der adressierten Objekte (ID-Nummern oder ähnliches) bezogen sein müssen, sondern zusätzliche Informationen enthalten können, die an den Nutzer des Client-Computers gerichtet sind. Diese zusätzlichen Nutzinformationen können Werbeinhalte wie Markennamen oder Slogans, allgemeine Hinweise über die Attraktivität oder Aktualität von Informationen, die Verfügbarkeit von Artikeln oder Hinweise zu Alternativangeboten oder Anwenderhilfen wie Benutzungshinweisen, Adressen usw. enthalten.

Das erfindungsgemäße Computersystem und das erfindungsgemäße Datenübertragungsverfahren haben den Vorteil, daß diese Zusatzinformation unabhängig von der Adressierungsinformation und unabhängig von der durch den Benutzer aufgerufenen Webseite wählbar ist. Dies beinhaltet selbstverständlich den Fall, daß die zusätzliche Information bewußt in Abhängigkeit von einer aufgerufenen Webseite gesendet wird, um beispielsweise Werbung zielgerichtet zu plazieren.

Die Erfindung wird im folgenden anhand bevorzugter Ausführungsbeispiele unter Bezugnahme auf die beiliegenden Zeichnungen erläutert, in denen
- Figur 1: ein schematisches Blockschaltbild einer Server/Client-Konfiguration in einem erfindungsgemäßen vernetzten Computersystem ist; und
- Figur 2: ein Flußdiagramm zur Erläuterung des erfindungsgemäßen Verfahrens und der Funktionsweise des erfindungsgemäßen Server-Computers ist.

Die Erfindung betrifft ein vernetztes Computersystem mit wenigstens einem Server-Computer und einem oder mehreren Client-Computern. Dabei ist unter Server-Computer (kurz: Server) ein Gerät zu verstehen, das durch die anderen Netzteilnehmer adressiert werden kann und in der Lage ist, Dateninhalte zu speichern, die durch andere Netzteilnehmer abgerufen werden können. Im Falle des world wide web handelt es sich bei dem Server-Computer beispielsweise um einen www-Server. Unter Client-Computer (kurz: Client) ist jedes festinstallierte oder tragbare Gerät zu verstehen, das an das Computernetzwerk anschließbar ist und Daten aus diesem abrufen kann. Es muß sich somit nicht um einen klassischen Computer wie im herkömmlichen Sinne handeln. Im Falle des world wide web handelt es sich vorzugsweise um einen www-Browser. Unter Computernetzwerk ist jede miteinander verbundene Client/Server-Kombination zu verstehen.

Träger und Verwalter aller Informationen ist der Server-Computer, der von dem Client-Computer mittels eines Adressdatenfeldes (im Falle des world wide web: einer URL) angesprochen wird. Zur Beantwortung der Anfrage oder des Requests schickt der Server-Computer dem Client-Computer sowohl die angeforderte inhaltliche Seite (meistens in Form einer HTML-Seite oder XML-Seite) und zusätzlich oftmals eine URL zurück. In dieser URL können neben der Adresse der angeforderten Seite auf dem Server-Computer weitere Informationen zur Kennzeichnung des Nutzers am Client-Computer, der Online-Sitzung (Session) oder der einbezogenen Objekte enthalten sein. Zusätzlich ist es erfindungsgemäß möglich, Nutzinformationen in die URL zu integrieren, die nichts mit dem Server-Computer oder dem Client-Computer oder dem Inhalt einer aufgerufenen Seite zu tun haben müssen.

Der Server-Computer verwendet hierzu einen Zusatzdienst, der diese Nutzinformationen mittels einer zusätzlichen Verarbeitung verarbeitet. Dies geschieht in Abhängigkeit von der Übertragungsrichtung zum Nutzer oder vom Nutzer auf jeweils verschiedene Art und Weise. Schreibt der Server-Computer die Zusatzinformationen in die URL zusätzlich hinein, erfolgt dies vor dem Zurückschicken an den Client-Computer. Kommt die URL vom Client, muß der Server unterscheiden, ob diese Zusatzinformationen enthalten sind oder nicht. Wenn diese zusätzlichen Inhalte Bestandteil der URL sind, filtert der Server diese vor der Adressierung des eigentlichen Inhaltes unter Verwendung des genannten Zusatzdienstes heraus. Die zulässigen Nutzinformationen werden in einer Nutzinformationsdatei aufgelistet. Die verbleibende URL, die die Adressierungsinformation enthält, wird an einen Prozessor des Servers zur üblichen Weiterverarbeitung übergeben.

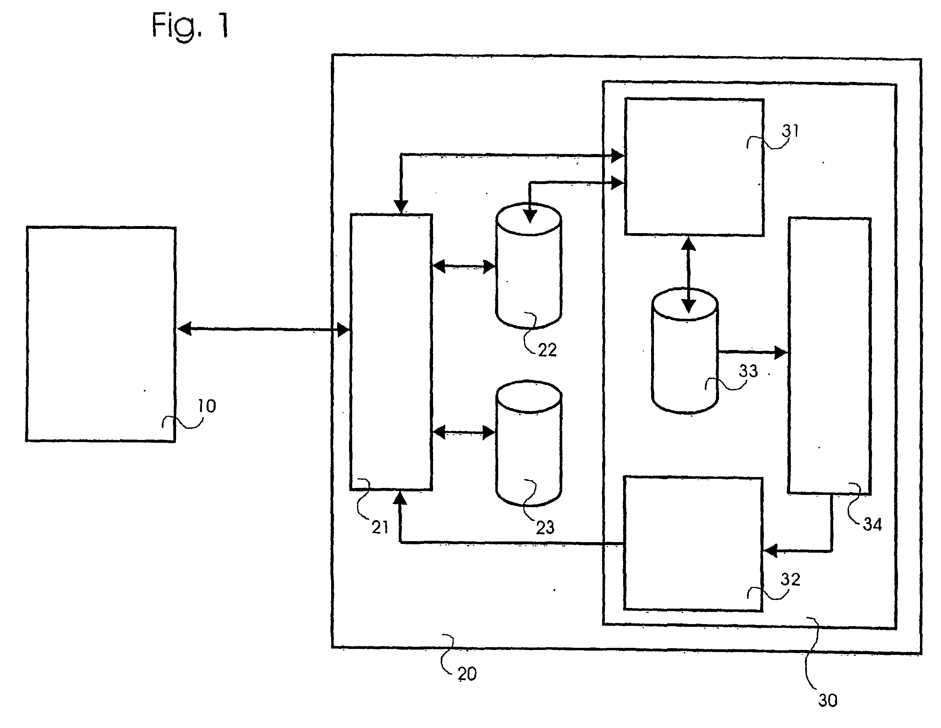

Figur 1 zeigt ein schematisches Blockschaltbild eines Server-Computers 20, der über ein Computernetzwerk mit einem Client-Computer 10 verbunden ist. Im allgemeinen umfaßt das Computernetzwerk noch eine Vielzahl weiterer Server und Clients, die hier aber aus Gründen der Übersichtlichkeit nicht dargestellt sind. Der Server-Computer 20 enthält einen Server-Prozessor 21 zur Verarbeitung der Adressierungsinformation, einen Speicher 22, der gültige URL's enthält, und einen Datenspeicher 23, der den Dateninhalt des Servers, beispielsweise HTML-Seiten enthält. Die Bauelemente 21, 22 und 23 und deren Funktion entsprechen denjenigen eines herkömmlichen Netzwerk-Servers beziehungsweise www-Servers. Zusätzlich weist der erfindungsgemäße Server einen URL-Prozessor 30 zur zusätzlichen Verarbeitung des Adressdatenfeldes auf. Der URL-Prozessor enthält eine Erfassungseinrichtung 31 zur Erfassung der in einem empfangenen Adressdatenfeld enthaltenen Adressierungsinformation und Nutzinformation und zur Trennung der Adressierungsinformation von der Nutzinformation, eine Einfügungseinrichtung 32 zur Einfügung von Nutzinformation in ein gesendetes Adressdatenfeld, einen Nutzinformationsspeicher 33 zum Speichern von Nutzinformation und eine Auswahleinrichtung 34 zur Auswahl von in dem Nutzinformationsspeicher 33 gespeicherter Nutzinformation zur Einfügung in das Adressdatenfeld und Übertragung an einen Client-Computer.

Der URL-Prozessor 30 kann als Zusatzfunktion für den Server 20 mittels bekannter Schnittstellen integriert werden. Als Schnittstellen lassen sich beispielsweise die Common Gateway Interface (CGI) oder die Application Programming Interface (API) nutzen, die beispielsweise im Beck Computer-Lexikon, München 1998, beschrieben sind.

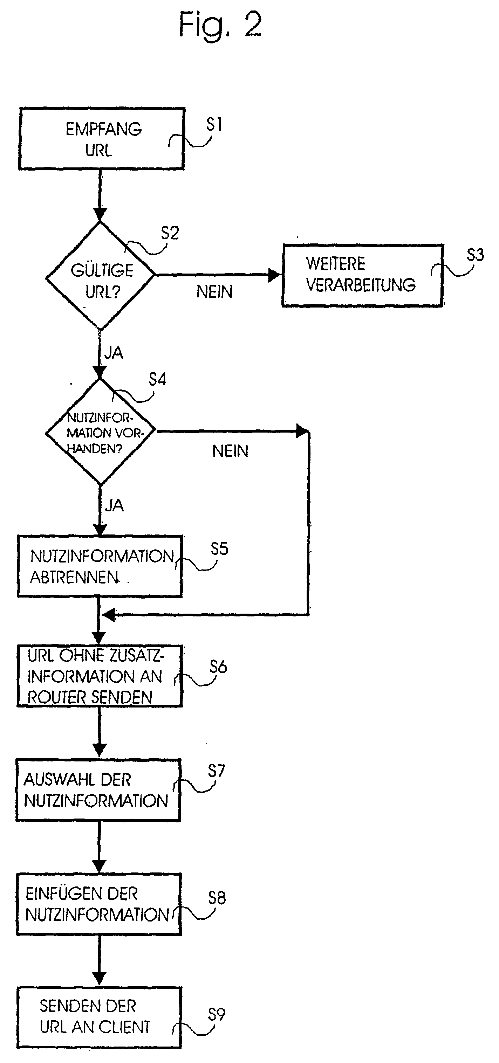

Die Funktionsweise des URL-Prozessors 30 wird im folgenden anhand des in Figur 2 gezeigten Flußdiagramms erläutert.

Zu Beginn wird von dem Server-Prozessor 21 des Server-Computers 20 ein Adressdatenfeld (URL) empfangen, das von einem Client-Computer 10 gesendet wurde. Die URL wird an die Erfassungseinrichtung 31 weitergeleitet, in der in einem Bestimmungsschritt S2 geprüft wird, ob gültige Adressierungsinformation vorhanden ist. Ist das nicht der Fall, wird dieses Resultat dem Server-Prozessor 21 weitergegeben, der dann in einem Verarbeitungsschritt S3 eine Fehlermeldung oder dergleichen an den Client-Computer 10 zurückschickt. Ist das Ergebnis in dem Bestimmungsschritt S2 bestätigend, d. h. gültige Adressierungsinformation in dem Adressdatenfeld vorhanden, wird durch die Erfassungseinrichtung 31 in Schritt S4 durch Vergleich mit dem Inhalt des Nutzinformationsspeichers 33 geprüft, ob in dem empfangenen Adressdatenfeld dem Server zugeordnete Nutzinformation vorhanden ist. Ist das Ergebnis dieser Bestimmung Ja, so wird die Nutzinformation in einem Schritt S5 von der Adressierungsinformation abgetrennt und die Adressierungsinformation anschließend in einem Verarbeitungsschritt S6 an den Server-Prozessor gesendet. Ist das Ergebnis im Prüfungsschritt S4 negativ, so wird der Schritt S5 ausgelassen und die Adressierungsinformation in Schritt S6 direkt dem Server-Prozessor 21 zugeführt. Bevor ein Adressdatenfeld an den Client-Computer zurückgesendet wird, wählt die Auswahleinrichtung 34 in einem Schritt S7 aus dem Nutzinformationsspeicher 33 diejenige Nutzinformation aus, die in dem Adressdatenfeld zusätzlich zu der Adressierungsinformation an den Client gesendet werden soll. Die Auswahl der Nutzinformation kann auf verschiedene Art und Weise erfolgen, wie später erläutert wird. Die Einfügungseinrichtung 32 fügt in Schritt S8 die durch die Auswahleinrichtung 34 ausgewählte Nutzinformation in das an den Client zu sendende Adressdatenfeld ein. Daraufhin wird das Adressdatenfeld in einem Schritt S9 an den Client gesendet.

Ein Beispiel eines derartigen Adressdatenfeldes mit Adressierungsinformation und zusätzlicher Nutzinformation ist im folgenden schematisch dargestellt.

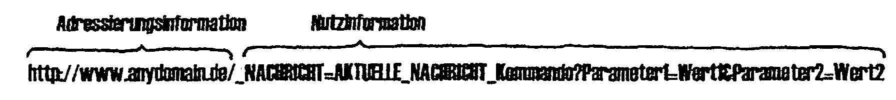

Die Nutzinformation kann in dem Adressdatenfeld vorzugsweise direkt hinter der Serveradresse oder auch an einer beliebigen anderen Stelle angeordnet sein.

Die Auswahl der mit dem Adressdatenfeld mitgesendeten Zusatzinformation durch die Auswahleinrichtung 34 kann auf verschiedene Art und Weise erfolgen.
a) Die Auswahl der Nutzinformation, die dem jeweiligen Adressdatenfeld beigefügt wird, richtet sich nach einer festgelegten Reihenfolge der in dem Nutzinformationsspeicher 33 gespeicherten Nutzinformationsdateien. Die Auswahl erfolgt so unabhängig von der jeweils zurückgesendeten Adressierungsinformation oder eines zurückgesendeten Dateninhalts, etwa einer HTML-Seite.
b) Die Auswahl richtet sich wie bei a) nach einer festgelegten Reihenfolge der Informationsdateien, jedoch werden die Nutzinformationsdateien einem Nutzer oder bestimmten Nutzergruppen zugeordnet. Ausgewählt werden dann nur solche Nutzinformationsdateien, die einem Nutzer oder einer Nutzergruppe zugeordnet sind, zu der der gerade aktive Nutzer ausweislich seiner Sendeadresse gehört. Das entspricht einer Nutzerprofilsteuerung, auch als One-to-One Marketing bezeichnet.
c) Die Auswahl der Nutzinformation erfolgt durch Zuordnung zu den Inhalten aus dem im Datenspeicher 23 des Servers 20 gespeicherten Datenbestand. Die Auswahl der mit dem Adressdatenfeld gesendeten Nutzinformation erfolgt also in Abhängigkeit des Inhaltes der an den Client zurückgegebenen Seiten. Es wird diejenige Nutzinformation selektiert, die diesen Inhalten, etwa durch eine Verweistabelle zwischen Datenspeicher 23 und Zusatzinformationsspeicher 33, zugeordnet wurden. Die Auswahl kann nach einer festgelegten Reihenfolge oder vorher festgelegten Prioritäten erfolgen. Die Auswahl der zu einer im Datenspeicher 23 gespeicherten HTML-Seite verfügbaren Zusatzinformation kann in Abhängigkeit von dem Inhalt der Seite variieren.
d) Die Auswahl der mit dem Adressdatenfeld gesendeten Nutzinformation erfolgt wie bei Variante c) durch Zuordnung der Nutzinformation zu den im Datenspeicher 23 des Servers gespeicherten Dateninhalten. Im Unterschied zu der Variante c) verändern sich auch bei einer dynamischen Erzeugung eines Inhalts von im Datenspeicher 23 gespeicherten, abgerufenen HTML-Seiten die für eine bestimmte Seite wählbaren Zusatzinformationen aufgrund einer starren Zuordnung nicht. Anders ausgedrückt, ist die Nutzinformation zu einer bestimmten an den Client übermittelten Seite unabhängig vom Seiteninhalt.

Als weitere Varianten sind Kombinationen der Verfahren b) und c) beziehungsweise c) und d) möglich.

Die Nutzinformation kann so abhängig gemacht werden von der durch den Client abgerufenen HTML-Seite, die durch die Adressierungsinformation identifiziert wird, oder von dem auf dieser Seite dargestellten Inhalt.

Eine vorteilhafte Weiterbildung der Erfindung ermöglicht es, den mit der Adressierungsinformation an den Client weitergeleiteten Nutzinhalt in periodisch festgelegten Zeitabständen, beispielsweise alle 10 ms oder 100 ms, zu ändern. Dadurch wird die Übertragung und Anzeige von Lauftext oder dergleichen auf einem Anzeigegerät des Client-Computers ermöglicht. Alternativ kann die Nutzinformation in Abhängigkeit von einer Aktion des Benutzers auf dem Client-Computer, beispielsweise eines Scroll-Vorgangs oder eines Mausklicks, geändert werden.

In verschiedenen-Fällen ist es vorteilhaft, die Adressierungsinformation in der URL verschlüsselt zu übertragen. Erfindungsgemäß kann einer verschlüsselten Adressierungsinformation eine unverschlüsselte Zusatzinformation hinzugefügt werden, die von dem Nutzer ohne Probleme erkennbar ist. Die Ver- bzw. Entschlüsselungskomponente wird wie üblich nach Abtrennung der Nutzinformation aus der URL adressiert.

Erfindungsgemäß wird ein vernetztes Computersystem, ein Server-Computer zur Verwendung mit einem Computernetzwerk, ein Verfahren zur Übertragung von Nutzinformation über ein Computernetzwerk und ein Computerprogramm für einen Server-Computer in einem Computernetzwerk vorgeschlagen, die eine Übermittlung von Nutzinformation mittels eines Adressdatenfeldes wie der URL ermöglicht. Dadurch können von dem Server-Computer gezielt ausgewählte Nutzinformationen wie Werbeinhalte, Nachrichten oder Anwenderhilfen an einen Client-Computer unabhängig von den durch den Client angewählten Adressen oder abgerufenen Dateninhalten übermittelt werden.

### Bezugszeichenliste

- 10: Client-Computer
- 20: Server-Computer
- 21: Server-Prozessor
- 22: Liste gültiger URL's
- 23: Datenspeicher
- 30: URL-Prozessor
- 31: Erfassungseinrichtung
- 32: Einfügungseinrichtung
- 33: Zusatzinformationsspeicher
- 34: Auswahleinrichtung

## Patentansprüche

1. Vernetztes Computersystem mit wenigstens einem Server-Computer (20) und wenigstens einem Client-Computer (10), wobei dem Server-Computer (20) ein über das Computernetzwerk übermittelbares Adressdatenfeld (URL) mit Adressierungsinformation zur eindeutigen Identifizierung des Server-Computers (20) und/oder von auf diesem gespeicherten Dateninhalten und/oder eines Befehls zugeordnet ist, **dadurch gekennzeichnet, daß** über dieses Adressdatenfeld zusätzlich Nutzinformation zwischen dem Server-Computer (20) und dem Client-Computer (10) übertragbar ist, die unabhängig von der Adressierungsinformation wählbar ist.

2. Vernetztes Computersystem nach Anspruch 1, **dadurch gekennzeichnet, daß** die Nutzinformation auf einer Anzeigeneinrichtung des Client-Computers (10) darstellbar ist.

3. Vernetztes Computersystem nach Anspruch 2, **dadurch gekennzeichnet, daß** die Nutzinformation hervorgehoben darstellbar ist.

4. Vernetztes Computersystem nach einem der Ansprüche 1 bis 3, **dadurch gekennzeichnet, daß** die Adressierungsinformation verschlüsselt und die Nutzinformation unverschlüsselt im Adressdatenfeld übertragen werden kann.

5. Vernetztes Computersystem nach einem der Ansprüche 1 bis 4, **dadurch gekennzeichnet, daß** die über das Adressdatenfeld an den Client-Computer (10) übertragene Nutzinformation in festgelegten Zeitintervallen periodisch änderbar ist.

6. Vernetztes Computersystem nach einem der Ansprüche 1 bis 4, **dadurch gekennzeichnet, daß** die über das Adressdatenfeld an den Client-Computer (10) übertragene Nutzinformation in Abhängigkeit von einem durch den Client-Computer ausgeführten Verarbeitungsvorgang änderbar ist.

7. Vernetztes Computersystem nach einem der Ansprüche 1 bis 6, **dadurch gekennzeichnet, daß** die Nutzinformation durch den Server-Computer (20) in Abhängigkeit von einem an einen Client-Computer (10) übertragenen Dateninhalt auswählbar ist.

8. Vernetztes Computersystem nach einem der Ansprüche 1 bis 7, **dadurch gekennzeichnet, daß** die Nutzinformation in dem Adressdatenfeld nach der Server-Adresse angeordnet ist.

9. Vernetztes Computersystem nach einem der Ansprüche 1 bis 8, **dadurch gekennzeichnet, daß** von dem Server-Computer (20) Nutzinformation gleichzeitig an eine Vielzahl von Client-Computern (10) übermittelt werden kann.

10. Verfahren zur Übermittlung von Nutzinformationen über ein Computernetzwerk zwischen einem Server-Computer (20) und wenigstens einem Client-Computer (10), wobei dem Server-Computer (20) ein über das Computernetzwerk übertragbares Adressdatenfeld (URL) mit Adressierungsinformationen zur eindeutigen Identifizierung des Server-Computers (20) und/oder von auf diesem gespeicherten Dateninhalten und/oder eines Befehls zugeordnet ist, **dadurch gekennzeichnet, daß** über das Adressdatenfeld zusätzlich Nutzinformation zwischen dem Server-Computer (20) und dem Client-Computer (10) übertragbar ist, welche unabhängig von der Adressierungsinformation wählbar ist.

11. Verfahren nach Anspruch 10, **dadurch gekennzeichnet, daß** die Nutzinformation auf einer Anzeigeneinrichtung des Client-Computers (10) dargestellt wird.

12. Verfahren nach Anspruch 11, **dadurch gekennzeichnet, daß** die Nutzinformation hervorgehoben dargestellt und/oder akustisch hervorgehoben wird.

13. Verfahren nach einem der Ansprüche 10 bis 12, **dadurch gekennzeichnet, daß** die Adressierungsinformation verschlüsselt und die Nutzinformation unverschlüsselt in dem Adressdatenfeld übertragen wird.

14. Verfahren nach einem der Ansprüche 10 bis 13, **dadurch gekennzeichnet, daß** Nutzinformationen in festgelegten Zeitintervallen vom Server-Computer (20) zum Client-Computer (10) übertragen wird.

15. Verfahren nach Anspruch 14, **dadurch gekennzeichnet, daß** die in Zeitintervallen übertragene Information zumindest teilweise periodisch geändert wird.

16. Verfahren nach einem der Ansprüche 10 bis 15, **dadurch gekennzeichnet, daß** die über das Adressdatenfeld von dem Server-Computer (20) an den Client-Computer (10) gesendete Nutzinformation durch einen von dem Client-Computer ausgeführten Verarbeitungsvorgang geändert wird.

17. Verfahren nach einem der Ansprüche 10 bis 16, **dadurch gekennzeichnet, daß** die Nutzinformation in Abhängigkeit von einem von dem Server-Computer (20) an den Client-Computer (10) übertragenen Dateninhalt ausgewählt wird.

18. Verfahren nach einem der Ansprüche 10 bis 17, **dadurch gekennzeichnet, daß** die Nutzinformation in dem Adressdatenfeld hinter der Server-Adresse angeordnet wird.

19. Verfahren nach einem der Ansprüche 10 bis 18, **dadurch gekennzeichnet, daß** von dem Server-Computer (20) Nutzinformation gleichzeitig an eine Vielzahl von Client-Computern (10) übermittelt wird.

20. Verfahren nach einem der Ansprüche 10 bis 19, **dadurch gekennzeichnet, daß** die Nutzinformation in Abhängigkeit des Nutzers ausgewählt wird.

21. Server-Computer zur Verbindung mit einem oder mehreren Client-Computern über ein Computernetzwerk, wobei dem Server-Computer (20) ein über das Computernetzwerk übertragbares Adressdatenfeld (URL) mit Adressierungsinformation zur eindeutigen Identifizierung des Server-Computers (20) und/oder von auf diesem gespeicherten Dateninhalten und/oder eines Befehls zugeordnet ist, **gekennzeichnet durch** einen URL-Prozessor (30) zur Verarbeitung des Adressdatenfeldes, aufweisend:
- einen Nutzinformationsspeicher (33) zum Speichern von über das Adressdatenfeld zusätzlich zur Adressierungsinformation zu übertragender Nutzinformation,
- eine Einfügungseinrichtung (32) zur Einfügung der Nutzinformation in das Adressdatenfeld,
- eine Erfassungseinrichtung (31) zur Erfassung von mit dem Adressdatenfeld empfangener Nutzinformation und Adressierungsinformation,
- eine Auswahleinrichtung (34) zur Auswahl von im Nutzinformationsspeicher (33) gespeicherter Nutzinformation zur Übertragung an einen oder mehrere Client-Computer (10) in dem Adressdatenfeld, wobei die Nutzinformation unabhängig von der Adressierungsinformation wählbar ist.

22. Server-Computer nach Anspruch 21, **dadurch gekennzeichnet, daß** die Auswahleinrichtung (34) ausgebildet ist, die zu übertragende Nutzinformation in Abhängigkeit von durch den Server-Computer (20) an einen Client-Computer (10) gesendeten Daten auszuwählen.

23. Server-Computer nach Anspruch 21 oder 22, **dadurch gekennzeichnet, daß** die Einfügungseinrichtung (32) die Nutzinformation nach der Server-Adresse einfügt.

24. Computerprogramm aufweisend Programmcodemittel zur Ausführung der folgenden Verfahrensschritte, wenn das Computerprogramm in einen Server-Computer (20) geladen wird, der über ein Computernetzwerk mit einem oder mehreren Client-Computern (10) verbunden ist:
- Erzeugung eines Adressdatenfeldes (URL) mit Adressierungsinformation zur eindeutigen Identifizierung des Server-Computers (20) und/oder von auf diesem gespeicherten Dateninhalten und/oder eines Befehls,
- Einfügung von zusätzlicher Nutzinformation in das Adressdatenfeld, wobei der Nutzinformation unabhängig von der Adressierungsinformation wählbar ist, und
- Absenden des Adressdatenfeldes mit der Adressierungsinformation und der Nutzinformation an den Client-Computer (10).

25. Auf einem Speichermedium gespeichertes Computerprogramm nach Anspruch 24.

## Claims

1. A networked computer system with at least one server computer (20) and at least one client computer (10), whereby an address data field (URL) that is capable of being transferred over the computer network, comprising addressing information for unambiguous identification of the server computer (20) and/or of data contents that are stored on said server computer and/or a command, is assigned to the server computer (20), **characterised in that**, in addition, useful information that can be chosen independently of the addressing information is capable of being transmitted between the server computer (20) and the client computer (10) via this address data field.

2. Networked computer system according to Claim 1, **characterised in that** the useful information is capable of being represented on a display device pertaining to the client computer (10).

3. Networked computer system according to Claim 2, **characterised in that** the useful information is capable of being represented in highlighted form.

4. Networked computer system according to one of Claims 1 to 3, **characterised in that** the addressing information can be transmitted in the address data field in encrypted form and the useful information can be transmitted in the address data field in non-encrypted form.

5. Networked computer system according to one of Claims 1 to 4, **characterised in that** the useful information that is transmitted to the client computer (10) via the address data field is capable of being changed periodically at fixed time-intervals.

6. Networked computer system according to one of Claims 1 to 4, **characterised in that** the useful information that is transmitted to the client computer (10) via the address data field is capable of being changed as a function of a processing operation executed by the client computer.

7. Networked computer system according to one of Claims 1 to 6, **characterised in that** the useful information is capable of being selected by the server computer (20) as a function of a data content that has been transmitted to a client computer (10).

8. Networked computer system according to one of Claims 1 to 7, **characterised in that** the useful information is arranged in the address data field after the server address.

9. Networked computer system according to one of Claims 1 to 8, **characterised in that** useful information can be transferred from the server computer (20) simultaneously to a plurality of client computers (10).

10. A process for transferring useful information over a computer network between a server computer (20) at least one client computer (10), whereby an address data field (URL) that is capable of being transmitted over the computer network, comprising addressing information for unambiguous identification of the server computer (20) and/or of data contents that are stored on said server computer and/or a command, is assigned to the server computer (20), **characterised in that**, in addition, useful information that can be chosen independently of the addressing information is capable of being transmitted via the address data field between the server computer (20) and the client computer (10).

11. Process according to Claim 10, **characterised in that** the useful information is represented on a display device pertaining to the client computer (10).

12. Process according to Claim 11, **characterised in that** the useful information is represented in highlighted form and/or is highlighted acoustically.

13. Process according to one of Claims 10 to 12, **characterised in that** the addressing information is transmitted in the address data field in encrypted form and the useful information is transmitted in the address data field in non-encrypted form.

14. Process according to one of Claims 10 to 13, **characterised in that** useful information is transmitted from the server computer (20) to the client computer (10) at fixed time-intervals.

15. Process according to Claim 14, **characterised in that** the information that is transmitted at time-intervals is changed periodically, at least in part.

16. Process according to one of Claims 10 to 15, **characterised in that** the useful information that is sent from the server computer (20) to the client computer (10) via the address data field is changed by a processing operation executed by the client computer.

17. Process according to one of Claims 10 to 16, **characterised in that** the useful information is selected as a function of a data content that has been transmitted from the server computer (20) to the client computer (10).

18. Process according to one of Claims 10 to 17, **characterised in that** the useful information is arranged in the address data field behind the server address.

19. Process according to one of Claims 10 to 18, **characterised in that** useful information is transferred from the server computer (20) simultaneously to a plurality of client computers (10).

20. Process according to one of Claims 10 to 19, **characterised in that** the useful information is selected as a function of the user.

21. A server computer for connection to one or more client computers over a computer network, whereby an address data field (URL) that is capable of being transmitted over the computer network, comprising addressing information for unambiguous identification of the server computer (10) and/or of data contents that are stored on said server computer and/or a command, is assigned to the server computer (20), **characterised by** a URL processor (30) for processing the address data field, comprising:
- a useful-information memory (33) for storing useful information to be transmitted via the address data field in addition to the addressing information,
- an insertion device (32) for inserting the useful information into the address data field,
- an acquisition device (31) for capturing useful information and addressing information received with the address data field,
- a selection device (34) for selecting useful information stored in the useful-information memory (33) for the purpose of transmission to one or more client computers (10) in the address data field, wherein the useful information is selectable independent of the addressing information.

22. Server computer according to Claim 21, **characterised in that** the selection device (34) is designed to select the useful information to be transmitted as a function of data that have been sent by the server computer (20) to a client computer (10).

23. Server computer according to Claim 21 or 22, **characterised in that** the insertion device (32) inserts the useful information after the server address.

24. A computer program comprising program-code means for executing the following process steps whenever the computer program is loaded into a server computer (20) which is connected to one or more client computers (10) over a computer network:
- generation of an address data field (URL) comprising addressing information for unambiguous identification of the server computer (20) and/or of data contents that are stored on said server computer and/or a command,
- insertion of additional useful information into the address data field wherein the useful information is selectable independent of the addressing information, and
- sending of the address data field with the addressing information and the useful information to the client computer (10).

25. A computer program according to claim 24 which is stored on a storage medium.

## Revendications

1. Système d'ordinateurs en réseau comportant au moins un ordinateur serveur (20) et au moins un ordinateur client (10), à l'ordinateur serveur (20) étant associé, transmissible par l'intermédiaire du réseau, un champ d'adresse (URL) avec information d'adresse pour identifier clairement l'ordinateur serveur (20) et/ou des contenus de données mémorisés sur celui-ci et/ou une instruction, **caractérisé en ce que** peuvent en outre être transmises entre l'ordinateur serveur (20) et l'ordinateur client (10) par l'intermédiaire de ce champ de données d'adresse, des informations utiles qui peuvent être sélectionnées indépendamment de l'information d'adressage.

2. Système d'ordinateurs en réseau selon la revendication 1, **caractérisé en ce que** l'information utile peut être affichée sur un dispositif d'affichage de l'ordinateur client (10).

3. Système d'ordinateurs en réseau selon la revendication 2, **caractérisé en ce que** l'information utile peut être affichée de manière rehaussée.

4. Système d'ordinateurs en réseau selon l'une des revendications 1 à 3, **caractérisé en ce que** dans le champ de données d'adresse l'information d'adressage peut être transmise cryptée et l'information utile non cryptée.

5. Système d'ordinateurs en réseau selon l'une des revendications 1 à 4, **caractérisé en ce que** l'information utile transmise à l'ordinateur client (10) par l'intermédiaire du champ de données d'adresse est modifiable périodiquement à des intervalles de temps définis.

6. Système d'ordinateurs en réseau selon l'une des revendications 1 à 4, **caractérisé en ce que** l'information utile transmise à l'ordinateur client (10) par l'intermédiaire du champ de données d'adresse est modifiable en fonction d'une opération de préparation exécutée par l'ordinateur client.

7. Système d'ordinateurs en réseau selon l'une des revendications 1 à 6, **caractérisé en ce que** l'information utile peut être sélectionnée par l'ordinateur serveur (20) en fonction d'un contenu de données transmis à un ordinateur client (10).

8. Système d'ordinateurs en réseau selon l'une des revendications 1 à 7, **caractérisé en ce que** dans le champ de données d'adresse l'information utile est disposée après l'adresse du serveur.

9. Système d'ordinateurs en réseau selon l'une des revendications 1 à 8, **caractérisé en ce que** l'information utile peut être transmise simultanément à une pluralité d'ordinateurs clients (10) par l'ordinateur serveur (20).

10. Procédé de transmission d'informations utiles, par l'intermédiaire d'un réseau d'ordinateurs, entre un ordinateur serveur (20) et au moins un ordinateur client (10), à l'ordinateur serveur (20) étant associé, transmissible par l'intermédiaire du réseau, un champ d'adresse (URL) avec information d'adresse pour identifier clairement l'ordinateur serveur (20) et/ou des contenus de données mémorisés sur celui-ci et/ou une instruction, **caractérisé en ce que** peuvent en outre transmises par l'intermédiaire du champ de données d'adresse entre l'ordinateur serveur (20) et l'ordinateur client (10), des informations utiles qui peuvent être sélectionnées indépendamment de l'information d'adressage.

11. Procédé selon la revendication 10, **caractérisé en ce que** l'information utile est affichée sur un dispositif d'affichage de l'ordinateur client (10).

12. Procédé selon la revendication 11, **caractérisé en ce que** l'information utile est affichée de manière rehaussée et/ou rehaussée acoustiquement.

13. Procédé selon l'une des revendications 10 à 12, **caractérisé en ce que** dans le champ de données d'adresse, l'information d'adressage est transmise cryptée et l'information utile non cryptée.

14. Procédé selon l'une des revendications 10 à 13, **caractérisé en ce que** les informations utiles sont transmises à des intervalles de temps définis par l'ordinateur serveur (20) à l'ordinateur client (10).

15. Procédé selon la revendication 14, **caractérisé en ce que** l'information transmise à intervalles de temps est partiellement modifiée périodiquement.

16. Procédé selon l'une des revendications 10 à 15, **caractérisé en ce que** l'information utile, envoyée par l'intermédiaire du champ de données d'adresse de l'ordinateur serveur (20) à l'ordinateur client (10), est modifiée par une opération de traitement exécutée par l'ordinateur client.

17. Procédé selon l'une des revendications 10 à 16, **caractérisé en ce que** l'information utile est sélectionnée en fonction d'un contenu de données transmis de l'ordinateur serveur (20) à l'ordinateur client (10).

18. Procédé selon l'une des revendications 10 à 17, **caractérisé en ce que** dans le champ de données d'adresse, l'information utile est disposée après l'adresse du serveur.

19. Procédé selon l'une des revendications 10 à 18, **caractérisé en ce que** l'information utile est transmise simultanément à une pluralité d'ordinateurs clients (10) par l'ordinateur serveur (20).

20. Procédé selon l'une des revendications 10 à 19, **caractérisé en ce que** l'information utile est sélectionnée en fonction de l'utilisateur.

21. Ordinateur serveur devant être relié avec un ou plusieurs ordinateurs clients par l'intermédiaire d'un réseau d'ordinateurs, à l'ordinateur serveur (20) étant associé, transmissible par l'intermédiaire du réseau, un champ d'adresse (URL) avec information d'adresse pour identifier clairement l'ordinateur serveur (20) et/ou des contenus de données mémorisés sur celui-ci et/ou une instruction, **caractérisé par** un processeur d'URL (30) de traitement du champ de données d'adresse, comportant :
- une mémoire d'informations utiles (33) pour la mémorisation d'informations utiles à transmettre par l'intermédiaire du champ de données d'adresse en sus de l'information d'adressage,
- un dispositif d'insertion (32) pour insérer l'information utile dans le champ de données d'adresse,
- un dispositif d'acquisition (31) pour l'acquisition d'informations utiles et d'informations d'adressage reçues avec le champ de données d'adresse,
- un dispositif de sélection (34) pour sélectionner des informations utiles mémorisées dans la mémoire d'informations utiles aux fins de transmission à un ou plusieurs ordinateurs clients (10) dans le champ de données d'adresse, l'information utile pouvant être sélectionnée indépendamment de l'information d'adressage.

22. Ordinateur serveur selon la revendication 21, **caractérisé en ce que** le dispositif de sélection (34) est conçu pour sélectionner l'information utile à transmettre, en fonction des données envoyées par l'ordinateur serveur (20) à un ordinateur client (10).

23. Ordinateur serveur selon la revendication 21 ou 22 **caractérisé en ce que** le dispositif d'insertion (32) insère l'information utile après l'adresse du serveur.

24. Programme d'ordinateur comportant des moyens formant codes de programmes pour exécuter les étapes de procédés suivantes, lorsque le programme d'ordinateur est chargé dans un ordinateur serveur (20), qui est relié à un ou plusieurs ordinateurs clients (10) par l'intermédiaire d'un réseau d'ordinateurs :
- création d'un champ de données d'adresse (URL) avec information d'adresse pour identifier clairement l'ordinateur serveur (20), et/ou des contenus de données mémorisés sur celui-ci et/ou une instruction,
- insertion d'information utile supplémentaire dans le champ de données d'adresse, l'information utile pouvant être sélectionnée indépendamment de l'information d'adressage, et
- envoi du champ de données d'adresse avec l'information d'adresse et l'information utile à l'ordinateur client (10).

25. Programme d'ordinateur selon la revendication 24, mémorisé sur un support de mémoire.
